# EUROPÄISCHE PATENTSCHRIFT

(11) **EP 0 359 092 B1**
(45) Veröffentlichungstag und Bekanntmachung des Hinweises auf die Patenterteilung: **13.07.1994**
(21) Anmeldenummer: 89116349.5
(22) Anmeldetag: 05.09.1989
(51) Int. Cl.: H04N 3/233, H04N 3/30

(54) **Ablenkschaltung für Fernsehbildröhre**
Deflection circuit for a television tube
Circuit de déflexion pour tube de télévision

(30) Priorität: 14.09.1988 DE 3831239
(43) Veröffentlichungstag der Anmeldung: 21.03.1990
(73) Patentinhaber: Deutsche Thomson-Brandt GmbH, 78003 Villingen-Schwenningen (DE)
(72) Erfinder: Spruck, Manfred, D-7730 Villingen (DE)

(56) Entgegenhaltungen:
- EP-A- 0 200 116
- EP-A- 0 249 144
- DE-A- 2 808 224
- IBM TECHNICAL DISCLOSURE BULLETIN, Band 9, Nr. 4, September 1966, Seiten 376-377, New York, US; H.A. FERRIER et al.: "Sweep circuitry for cathode ray tube display"

## Beschreibung

Die Erfindung geht aus von einer Ablenkschaltung für eine Fernsehbildröhre gemäß dem Oberbegriff des Anspruchs 1. Eine derartige Ablenkschaltung ist bekannt durch die EP-A-0 200 116.

Eine derartige Schaltung erfordert einen Eingriff in die Vertikalablenkschaltung, weil der der Vertikalablenkspule zugeführte Ablenkstrom im Gegensatz zu der asymmetrischen Ablenkung keinen sägezahnförmigen Verlauf, sondern einen treppenförmigen Verlauf haben muß.

Der Erfindung liegt die Aufgabe zugrunde, die beschriebene Ablenkschaltung mit symmetrischer Horizontalablenkung so auszubilden, daß die für eine asymmetrische sägezahnförmige Ablenkung vorgesehene konventionelle Vertikalablenkschaltung vollständig und weitestgehend unverändert weiter verwendet werden kann.

Diese Aufgabe wird bei einer Ablenkschaltung nach dem Oberbegriff des Anspruchs 1 durch die im kennzeichnenden Teil angegebenen Merkmale gelöst.

Durch IBM Technical Disclosure Bulletin, Band 9, Nr. 4, Sept. 1966, Seiten 376 - 377 ist auch eine Ablenkschaltung für eine Bildröhre mit alphanumerischer Darstellung bekannt, bei der der Horizontalablenkspule ein treppenförmiger Ablenkstrom zugeführt wird, der aus einem niederfrequenten sägezahnförmigen Strom und einem demgegenüber höherfrequenten Strom zusammengesetzt ist.

Bei der vorliegenden Erfindung wird der Ausgangsstrom des Vertikalgenerators mit einem Korrekturstrom überlagert, der im Ergebnis zu einer diskontinuierlichen Ablenkung in vertikaler Richtung führt. Dadurch wird die Möglichkeit eröffnet, den Elektronenstrahl zunächst horizontal über den Bildschirm zu führen, also ohne die Einwirkung einer Ablenkung in vertikaler Richtung. An den Wendepunkten, die außerhalb des sichtbaren Bildschirmbereichs liegen, kann der Elektronenstrahl dann um eine Zeilenbreite oder beim Zeilensprungverfahren um zwei Zeilenbreiten vertikal verschoben werden. Dann läßt sich der Elektronenstrahl wieder ohne Einwirkung der Ablenkung in vertikaler Richtung horizontal über den Bildschirm führen, diesmal allerdings in umgekehrter Richtung. Die in dieser Weise geschriebenen Zeilen sind horizontal ausgerichtet und damit auch untereinander parallel.

Eine Weiterbildung der Erfindung berücksichtigt auch die Tangensentzerrung bei der Vertikalablenkung, die sich als eine s-förmige Abflachung des Ausgangsstroms des Vertikalgenerators darstellt. Hierbei bewirkt ein einer Additionsschaltung in einer Amplitudensteuerschaltung für die Vertikalablenkung zugeführtes erstes Steuersignal eine Änderung des Korrekturstroms, so daß der Ausgangsstrom tangenskompensiert ist.

Eine zusätzliche Weiterbildung dient zum Ausgleich von Übersprecherscheinungen zwischen der Horizontal- und Vertikalablenkstufe. Diese Störung würde wechselweise mit den Zeilen einmal die Wirkung der Erfindung unterstützen und einmal ihr entgegenwirken. Durch Zuführung eines zweiten Steuersignals zur Amplitudensteuerschaltung kann auch diese Störung kompensiert werden.

Weitere Ausgestaltungen der Erfindung ergeben sich aus den Ansprüchen, der Beschreibung und der Zeichnung, die Auführungsbeispiele der Erfindung veranschaulicht.

In der Zeichnung zeigen:
- Fig. 1-3: Zeilenstrukturen auf einem Bildschirm sowie die dazugehörigen Ausgangsgrößen der Ablenkschaltung,
- Fig. 4: eine Schaltung zur Erläuterung des erfindungsge mäßen Schaltungsprinzips,
- Fig. 5: eine vorteilhafte Ausgestaltung der erfindungsge mäßen Schaltung und
- Fig. 6, 7: Diagramme von Spannungen und Strömen, wie sie bei den Schaltungen gemäß Fig.4 und 5 auftreten.

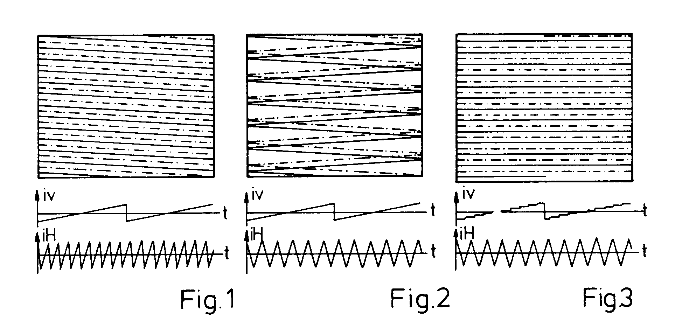

Die in den Fig. 1 bis 3 wiedergegebenen Zeilenstrukturen beziehen sich alle auf das Zeilensprungverfahren. Die Zeilen des ersten Halbbildes sind ausgezogen gezeichnet, die Zeilen des zweiten Halbbildes gestrichelt gezeichnet.

Die in Fig. 1 dargestellte Zeilenstruktur wird bei konventionellen Ablenkschaltungen erzielt, also durch sägezahnförmige Stromverläufe über der Zeitachse in der Horizontalablenkspule und der Vertikalablenkspule. Die Zeilen, in welchen die Bildinformationen geschrieben werden, sind schräg, aber untereinander parallel. Trotz der Neigung zur Horizontalen ergibt sich ein einwandfreier Bildeindruck.

In Fig. 2 ist die Vertikalablenkung unverändert, die Horizontalablenkung dagegen symmetrisch. Von den Wendepunkten aus spreizen sich die Zeilen, so daß eine zick-zack-förmige Struktur entsteht. Der Bildeindruck ist hier unbefriedigend.

In Fig. 3 wird die Horizontalablenkspule in gleicher Weise wie bei der Darstellung in Fig. 2 gespeist. Die Vertikalablenkung ist jedoch verändert. Statt eines gleichförmigen Stromverlaufs zwischen den Bildwechseln wird die Vertikalablenkspule mit einem treppenstufenfömigen Stromverlauf über der Zeitachse gespeist. Infolgedessen wird in den waagerechten Abschnitten des Stromverlaufs keine Vertikalablenkung des Elektronenstrahls bewirkt und die Horizontalablenkung führt den Elektronenstrahl dann waagerecht über den Bildschirm. Erst in den Wendepunkten erfolgt sprunghaft die Vertikalablenkung. Die Zeilen werden auf diese Weise in gleichmäßigem Abstand parallel auf den Bildschirm geschrieben, wodurch sich wieder ein einwandfreier Bildeindruck ergibt.

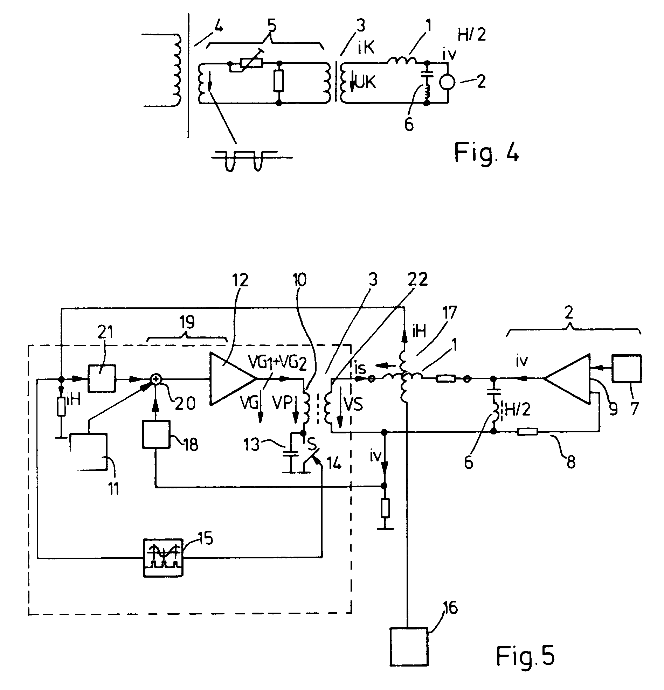

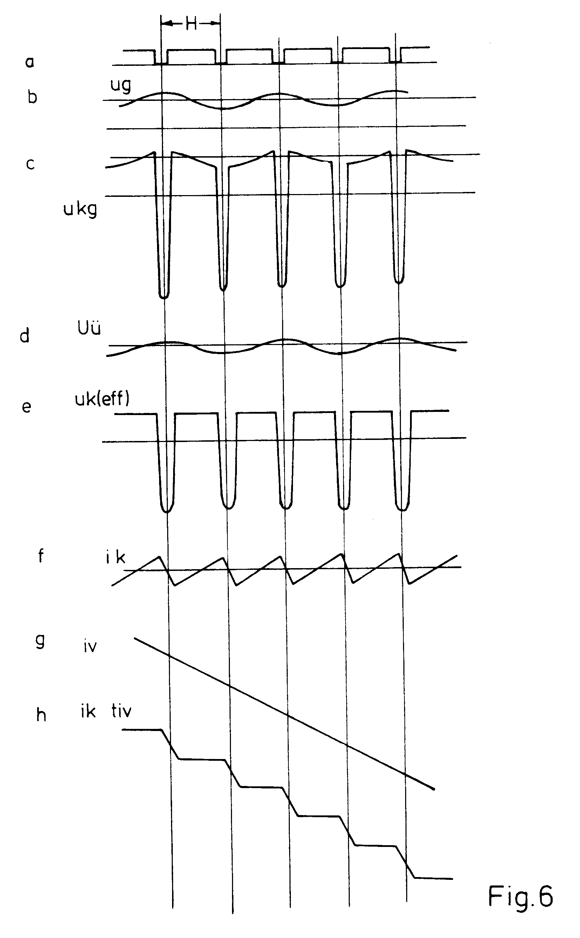

Fig. 4 zeigt eine Schaltung, die es ermöglicht, in der Vertikalablenkspule einen treppenstufenförmigen Stromverlauf über der Zeitachse hervorzurufen. Die Schaltung umfaßt eine Vertikalablenkspule 1, die auf einer Seite mit einem Vertikalgenerator 2 und auf der anderen Seite mit einem Transformator 3 verbunden ist. Durch den Vertikalgenerator 2 wird ein Ausgangsstrom iᵥ und durch den Transformator 3 ein Korrekturstrom iₖ eingespeist. Die Ströme addieren sich dabei zu einem zusammengesetzten Vertikalablenkstrom iₖ + iᵥ. Die Stromverläufe sind in Fig. 6 f, g, und h wiedergegeben. Der Korrekturstrom iₖ wird durch eine Korrekturspannung uₖ erzeugt, die mittels eines Transformators 4 aus einem hier nicht dargestellten Hochspannungsgenerator eines Fernsehgerätes ausgekoppelt wird. Mittels einer Amplitudensteuerschaltung 5 kann die Amplitude des Korrekturstromes iₖ eingestellt werden, daß die Steigung seiner ansteigenden Flanke gleich der Steigung der abfallenden Flanke des Ausgangsstroms iᵥ ist und der zusammengesetzte Vertikalablenkstrom iₖ + iᵥ horizontale Abschnitte erhält. Schließlich ist bei der Schaltung noch ein Saugkreis 6 parallel zum Vertikalgenerator 2 geschaltet, der auf die Frequenz eines Horizontalgenerators bzw. die mit dessen Frequenz übereinstimmende Frequenz des Korrekturstromes iₖ abgestimmt ist. Dieser Saugkreis 6 überbrückt den Vertikalgenerator 2 hochfrequenzmäßig für den Korrekturstrom iₖ

Fig. 5 zeigt eine vorteilhafte Ausgestaltung der Schaltung nach der Erfindung. Bei diese Schaltung sind zusätzliche Maßnahmen getroffen, um eine Tangensentzerrung beim Ausgangsstrom des Vertikalgenerators sowie ein Übersprechen zwischen den Ablenkspulen zu berücksichtigen.

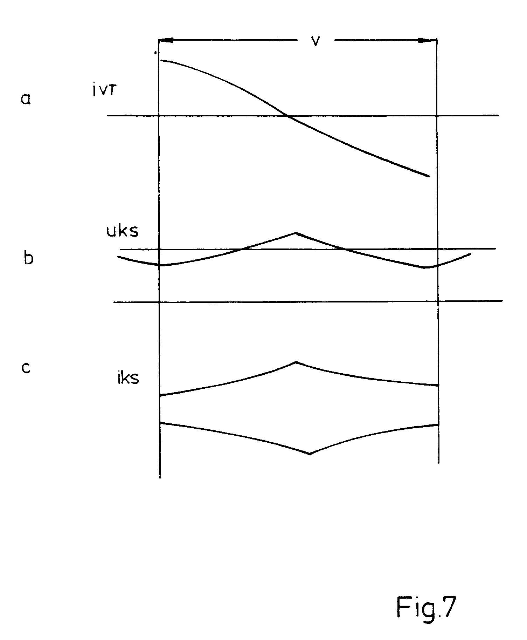

Die Vertikalablenkspule 1 entspricht wieder derjenigen aus Fig. 4. Der Vertikalgenerator 2 umfaßt einen Oszillator 7 und eine mit einer Rückführung 8 versehene Treiberstufe 9. Der tangenzentzerrte Ausgangsstrom i_{vT} ist in Fig. 7 a dargestellt. Dabei berücksichtigt die Tangenzentzerrung den Umstand, daß mit zunehmendem Vertikalablenkwinkel die Ablenkschritte verringert werden müssen, um den gleichen Zeilenabstand wie in der Bildschirmmitte zu erhalten.

Der Transformator 3 entspricht wieder demjenigen aus Fig. 4. Die Erzeugung eines Korrekturstromes iₖ erfolgt mittels der Primärwicklung 10 des Transformators 3 , einer Spannungsquelle 11, die über eine weitere Treiberstufe 12 mit der Primärwicklung 10 des Transformators 3 verbunden ist, einem Kondensator 13 sowie einem gesteuerten Schalter 14. Durch periodisches Schließen des Schalters 14 zu den Zeitpunkten, an denen der Elektronenstrahl an den Wendepunkten der Zeilen angelangt ist, werden negative Spannungspulse der Primarwicklung 10 aufgeprägt, wie sie in Fig. 6 e dargestellt sind. Diese Spannungspulse führen zu den abfallenden Flanken des Korrekturstroms iₖ in Fig. 6 f. Bei Öffnen des Schalters 14 in den Zeitspannen der Horizontalablenkung des Elektronenstrahls lädt sich der Kondensator 13 auf und in dieser Phase werden die ansteigenden Flanken des Korrekturstromes iₖ in Fig. 6 f erzeugt.

Zur Steuerung des Schalters 14 ist ein Konverter 15 vorgesehen, der aus dem symmetrischen Ausgangsstrom iₕ eines Horizontalgenerators 16, welcher eine Horizontalablenkspule 17 speist, ein Schaltsignal gewinnt. Dabei werden die Nulldurchgänge des Ausgangsstroms detektiert und die Ereignisse um 90 Grad phasenverschoben. Das erhaltene Schaltsignal deckt sich dann mit den Extremwerten des Ausgangsstroms iₕ, oder anders ausgedrückt, mit den Wendepunkten des Elektronenstrahls am linken und rechten Bildrand des Bildschirms.

Zur Berücksichtung der Tangensentzerrung des Ausgangsstroms iᵥ wird ein Teil dieses Stroms einer Anpaßschaltung 18 Zugeführt, die daraus ein erstes Steuersignal gewinnt und dieses einer Amplitudensteuerschaltung 19 zuführt. Die Amplitudensteuerschaltung ist dabei aus einer Additionsstelle 20 und der weiteren Treiberstufe 12 gebildet. Durch diese Maßnahme wird der in Fig. 7 b dargestellte spannungsverlauf uₖₛ an der Primärwicklung 10 des Transformators 3 erzeugt, der wiederum den in Fig. 7 c dargestellten Stromverlauf iₖₛ zur Folge hat. Im Ergebnis wird der tangensentzerrte Ausgangsstrom i_{vT} des Vertikalgenerators 2 auf diese Weise immer mit einem solchen Korrekturstrom iₖₛ beaufschlagt, daß der zusammengestzte Vertikalablenkstrom iₖ + iᵥ stets waagerechte Abschnitte aufweist. Neigungen dieser Abschnitte infolge der unterschiedlichen Flankensteigungen des Ausgangsstroms i_{vT} werden also vermieden.

Durch die Ausgestaltung der Vertikal- und Horizontalablenkspulen hervorgerufenes Übersprechen kann eine unerwünschte Überlagerung des zusammengesetzten Vertikalablenkstroms mit einem Wechselstrom (entsprechend einer Übersprechspannung u_{ü}) bewirken, wie er in Fig. 6 d dargestellt ist. Dieser Wechselstrom würde während eines Zeilendurchlaufs die Flankensteilheit des Korrekturstroms iₖ erhöhen und während des folgenden Zeilendurchlaufs die Flankensteilheit erniedrigen. Die Folge wäre, daß nur jede zweite Zeile eines Halbbildes parallel liefe während aufeinanderfolgende Zeilen gegenseitig geneigt wären. Zur Beseitigung dieses Einflusses wird ein Teil des Ausgangsstroms iₕ des Horizontalgenerators 12 über eine weitere Anpaßschaltung 21 der Additionsstelle 20 zugeführt und der an der Primärwicklung 10 des Transformators 3 anstehenden Spannung als Spannung u_{g} überlagert. Der Verlauf dieser Spannung u_{g} ist in Fig 6 b dargestellt. Die in Verbindung mit der in Fig. 6 a dargestellte Schalterstellung des Schalter 14 erzeugte Korrekturspannung u_{kg} ergibt sich aus Fig. 6 c. Durch Rückwirkung über die Sekundärwicklung 22 des Transformators 3 kompensieren sich die Spannungen u_{ü} und u_{g} so, daß die effektive Korrekturspannung uₖ wieder von einer Überlagerung mit einer Wechselspannung frei ist, wie in Fig. 6 e angedeutet ist.

## Patentansprüche

1. Ablenkschaltung für eine Fernsehbildröhre mit symmetrischer Horizontal-Ablenkung, mit einem Horizontalgenerator (16) und einem Vertikalgenerator (2), deren Ausgangsströme (i_{H}) und iᵥ) zur Steuerung einer Horizontal (17) - bzw. Vertikalablenkspule (1) dienen, wobei der Ausgangsstrom (iₛ) für die Vertikalablenkspule (1) einen derartigen treppenförmigen Verlauf hat, daß der Strom jeweils während einer Zeilendauer konstant ist und vor Beginn der nächsten Zeilendauer sprunghaft um einen Wert ansteigt, der dem räumlichen Abstand von zwei zeitlich aufeinanderfolgend geschriebenen Zeilen entspricht, **dadurch gekennzeichnet**, daß der treppenförmige Verlauf des Ausgangsstromes (iₛ) für die Vertikalablenkspule (1) erzeugt wird durch Überlagerung des unsymmetrisch sägezahnförmigen Ausgangsstroms (iᵥ) des Vertikalgenerators mit einem mittels eines Transformators (3) eingekoppelten, zeilenfrequenten, unsymmetrisch sägezahnförmigen Korrekturstrom (i_{K}), dessen Steigung entgegengesetzt gleich der des Ausgangsstroms (iᵥ) des Vertikalgenerators ist.

2. Ablenkschaltung nach Anspruch 1, **dadurch gekennzeichnet**, daß zwischen dem Horizontalgenerator (16) und der Vertikalablenkspule (1) eine Korrekturschaltung angeordnet ist, die eine Amplitudensteuerschaltung (19) umfaßt, mit der ein Verlauf des zusammengesetzten Vertikalablenkstromes (iᵥ + iₖ) derart einstellbar ist, daß eine Treppenstufenform mit zeilenweise waagerechten Abschnitten entsteht.

3. Ablenkschaltung nach Anspruch 1 oder 2, **dadurch gekennzeichnet**, daß der Ausgang des Vertikalgenerators (2) mit einem Saugkreis (6) belastet ist, der auf die Frequenz des Horizontalgenerators (16) abgestimmt ist.

4. Ablenkschaltung nach Anspruch 2, wobei der Ausgangsstrom des Vertikalgenerators (2) tangensentzerrt ist, **dadurch gekennzeichnet**, daß der Amplitudensteuerschaltung (19) ein Steuersignal zugeführt ist, welches mittels einer Anpaßschaltung (18) aus dem Ausgangsstrom (iᵥ) des Vertikalgenerators (2) gewonnen ist.

5. Ablenkschaltung nach Anspruch 4,**dadurch gekennzeichnet**, daß das Steuersignal der Amplitudensteuerschaltung (19) über eine darin enthaltene Additionsschaltung (20) zugeführt ist, welche das Steuersignal mit einem weiteren Steursignal zur Kompensation von Übersprechen zwischen Horizontal- und Vertikalablenkung überlagert.

## Claims

1. Deflection circuit for a television tube with symmetrical horizontal deflection, with a horizontal generator (16) and a vertical generator (2), the output currents (iH) and (iv) of which are for controlling a horizontal deflection coil (17) and vertical deflection coil (1) respectively, wherein the output current (is) for the vertical deflection coil (1) has a step-shaped pattern such that the current is always constant during a line period and before the start of the next line period rapidly increases by a value which corresponds to the spatial distance apart of two written lines following each other temporally, characterised in that the step-shaped pattern of the output current (is) for the vertical deflection coil (1) is produced by superimposing the asymmetrical saw-tooth patterned output current (iv) of the vertical generator with a line frequency, asymmetrical, saw-tooth patterned correcting current (iK), coupled in by means of a transformer (3), the slope of which is equal and opposite to that of the output current (iv) of the vertical generator.

2. Deflection circuit according to claim 1, characterised in that between the horizontal generator (16) and the vertical deflection coil (1) a correction circuit is arranged which includes an amplitude control circuit (19), with which a pattern of the composite vertical deflection current (iv + ik) is adjustable in such a manner that there occurs a step-shape with horizontal sections line-by-line.

3. Deflection circuit according to claim 1 or 2, characterised in that the output of the vertical generator (2) is loaded with an absorption circuit (6) which is matched to the frequency of the horizontal generator (16).

4. Deflection circuit according to claim 2, wherein the output current of the vertical generator (2) is tangentially equalised, characterised in that a control signal is supplied to the amplitude control circuit (19) which is obtained from the output current (iv) of the vertical generator (2) by means of a matching circuit (18).

5. Deflection circuit according to claim 4, characterised in that the control signal is supplied to the amplitude control circuit (19) via an addition circuit (20) contained therein, which superimposes the control signal with a further control signal for correcting for cross-talk between the horizontal and vertical deflection.

## Revendications

1. Circuit de balayage pour un tube image de télévision avec balayage horizontal symétrique, avec un générateur horizontal (16) et un générateur vertical (2), dont les courants de sortie (i_{H} et iᵥ) servent à la commande d'une bobine de balayage horizontal (17) ou vertical (1), le courant de sortie (iₛ) pour la bobine de balayage vertical (1) ayant une telle allure en gradins que le courant est constant respectivement pendant la durée d'une ligne et monte, avant le début de la prochaine durée de ligne, brusquement d'une valeur qui correspond à l'écart spatial de deux lignes écrites en se suivant dans le temps, **caractérisé en ce** que l'allure en gradins du courant de sortie (iₛ) pour la bobine de balayage vertical (1) est produite par superposition du courant de sortie en dent de scie asymétrique (iᵥ) du générateur vertical avec un courant de correction (iₖ) en dent de scie asymétrique, à fréquence ligne, alimenté au moyen d'un transformateur (3), courant de correction dont la pente est la même en sens opposé que celle du courant de sortie (iᵥ) du générateur vertical.

2. Circuit de balayage selon la revendication 1, **caractérisé en ce** qu'un circuit de correction est placé entre le générateur horizontal (16) et la bobine de balayage vertical (1), circuit qui comprend un circuit de commande de l'amplitude (19) avec lequel une allure du courant de balayage vertical composé (iᵥ + iₖ) est réglable à tel point qu'il se forme une forme de gradin avec des sections horizontales ligne par ligne.

3. Circuit de balayage selon la revendication 1 ou 2, **caractérisé en ce** que la sortie du générateur vertical (2) est chargée avec un circuit d'absorption (6) qui est accordé à la fréquence du générateur horizontal (16).

4. Circuit de balayage selon la revendication 2, le courant de sortie du générateur vertical (2) ayant subi une correction de distorsion de tangente, **caractérisé en ce** qu'un signal de commande, qui est obtenu à partir d'un circuit d'adaptation (18) à partir du courant de sortie (iᵥ) du générateur vertical (2), est amené au circuit de commande d'amplitude (19).

5. Circuit de balayage selon la revendication 4, **caractérisé en ce** que le signal de commande est amené au circuit de commande d'amplitude (19) par un circuit additionneur qui y est contenu (20), qui superpose le signal de commande avec un autre signal de commande pour compenser la diaphonie entre le balayage horizontal et le balayage vertical.
